**Europäisches Patentamt**

**European Patent Office**

**Office européen des brevets**

(19)

(11) Veröffentlichungsnummer : **0 082 250**
**B1**

(12)                    **EUROPÄISCHE PATENTSCHRIFT**

(45) Veröffentlichungstag der Patentschrift :
**11.11.87**

(21) Anmeldenummer : **82108315.1**

(22) Anmeldetag : **09.09.82**

(51) Int. Cl.⁴ : **G 01 G   3/16**, G 01 G   3/08,
G 01 G  21/24

(54) **Waage.**

(30) Priorität : **22.12.81 CH 8198/81**

(43) Veröffentlichungstag der Anmeldung :
**29.06.83 Patentblatt 83/26**

(45) Bekanntmachung des Hinweises auf die Patenterteilung : **11.11.87 Patentblatt 87/46**

(84) Benannte Vertragsstaaten :
**DE FR GB NL**

(56) Entgegenhaltungen :
**CH-A-   533 296**
**DE-A- 1 573 589**
**FR-A- 1 203 875**
**US-A- 2 649 294**
**US-A- 2 697 595**
**US-A- 3 191 702**
**US-A- 3 443 653**
**US-A- 4 022 288**

(73) Patentinhaber : **Mettler Instrumente AG**
**Im Langacher**
**CH-8606 Greifensee (CH)**

(72) Erfinder : **Meier, Eugen**
**Wampflenstrasse 45**
**CH-8706 Meilen (CH)**

## Beschreibung

Die Erfindung betrifft eine Waage mit einem Waagengestell, einem Messsystem und einem beweglichen, das Messsystem beeinflussenden Lastträger, der mittels in zwei Ebenen übereinander angeordneten, durch Biegefedern gebildeten Lenkern am Waagengestell parallel geführt ist, wobei der Lastträger benachbart zum Messsystem angeordnet ist. Eine derart aufgebaute Waage ist aus der CH-PS 533 296 bekannt. Aehnliche Waagen werden in den CH-PS 552 799 und 591 685 beschrieben.

In der US-PS 4 022 288 wird eine Federwaage beschrieben. Darin sind mehrere Teilfedern in zwei Ebenen übereinander derart geneigt angeordnet, dass bei Belastung die einen Teilfedern eine Zunahme, die anderen Teilfedern eine Abnahme der effektiven Biegelänge erfahren. Damit wird eine etwa konstante Einfederung (Federrate) über den Wägebereich angestrebt.

Aus der DE-OS 1 573 589 ist eine Federwaage bekannt, deren Teilfedern an ihrem freien Ende ein verstellbares Klemmstück verbindet. Durch Verstellen dieses Klemmstückes kann die Federwirkung verändert werden und damit der Messbereich der Waage.

Gewisse Messsysteme erfordern, um korrekt und genau zu funktionieren, dass die zu messende Kraft im ganzen Lastbereich stets in der gleichen Richtung auf sie ausgeübt wird. Diese Bedingung bedeutet beispielsweise bei Saitenwaagen, dass die Saiten nur in ihrer Längsrichtung zu beanspruchen, Querkraftkomponenten also zu vermeiden sind.

Es ist ferner häufig vorteilhaft, das Messsystem so weit wie möglich schwingungsmässig vom Waagengestell zu entkoppeln.

Es ist bei den bekannten Waagen bisher nur mit verhältnismässig hohem Aufwand gelungen, die genannten Bedingungen zu erfüllen. Schwierigkeiten bereiten vor allem die temperaturabhängigen Aenderungen der Eigenschaften der Lenker für die Parallelführung des Lastträgers und der Uebertragungsorgane zwischen Lastträger und Messsystem. Man hat dieses Problem bisher durch die Verwendung von Materialien mit vernachlässigbarem Temperaturkoeffizienten zum Beispiel des Elastizitätsmoduls für die kritischen Teile oder von besonderen Mitteln zur Temperaturkompensation gelöst.

Die erfindungsgemässe Lösung der vorgenannten Probleme besteht darin, dass eine mit dem Messsystem verbundene, bewegliche Konsole vorgesehen ist, welche einerseits über mechanische Tiefpassfilter mit dem Waagengestell, andererseits über Lenker mit dem Lastträger verbunden ist, wobei sich die die Konsole und den Lastträger verbindenden Lenker in gleicher Richtung zum Waagengestell hin und zu je einem gemeinsamen oberen bzw. unteren freischwebenden Verbindungsstück erstrecken.

Auf diese Weise gleichen sich die Längenänderungen der unter gleichem Temperatureinfluss stehenden Lenkerarme aus, so dass eine temperaturunabhängige Parallelführung des Lastträgers, das heisst Konstanz des Abstandes zwischen Lastträger und Konsole, erreicht wird. Die Materialwahl ist dabei unkritisch. Durch die Anordnung des Lastträgers in der Nähe der Konsole kann das Uebertragungsorgan ausserdem so kurz gehalten werden, dass Temperaturänderungen an dieser Stelle keinen messbaren Einfluss mehr haben. Wenn die Anordnung zudem so getroffen wird, dass sich die Konsole in der Bewegungsebene des Lastträgers befindet, zum Beispiel in einer Ausnehmung desselben, oder umgekehrt, dann kann das Uebertragungsorgan sogar entfallen. Bei exzentrischer Wägegutauflage liegen in diesen Fällen die Momentan-Drehzentren der Konsole und des Gehänges sehr nahe den Koppelpunkten des Messgliedes. Ganz allgemein wird durch die Nähe von Konsole und Gehänge mit einem kleinen Materialaufwand eine grosse Stabilität derselben erreicht.

Vorzugsweise wird eine Ausführungsform gewählt, bei der jeder Lenker mehrere Arme umfasst und diese mit dem Verbindungsstück einstückig ausgebildet sind.

Die die Konsole vom Waagengestell in bezug auf Vibrationen entkoppelnden mechanischen Tiefpassfilter werden vorzugsweise als elastische Blattfeder-Lenker ausgebildet. Es besteht dabei die Möglichkeit, die die Tiefpassfilter bildenden Lenker mit den Lenkern einer Ebene einstückig auszubilden.

In diesem Fall sind für die Lenker und die Tiefpassfilter in den beiden übereinanderliegenden Ebenen insgesamt lediglich zwei identische, zum Beispiel als Stanzteile ausgeführte Elemente erforderlich, die zudem aus einem nach rein mechanischen Gesichtspunkten auswählbarem Material hergestellt werden können. Dadurch ergibt sich eine in der Herstellung und Montage einfache und kostengünstige Konstruktion. Das Waagengestell bzw. -gehäuse bedarf keiner besonderen Stabilität und kann deshalb zum Beispiel aus Kunststoff bestehen.

In der Zeichnung ist ein Ausführungsbeispiel der Erfindung schematisch dargestellt, und zwar zeigen :

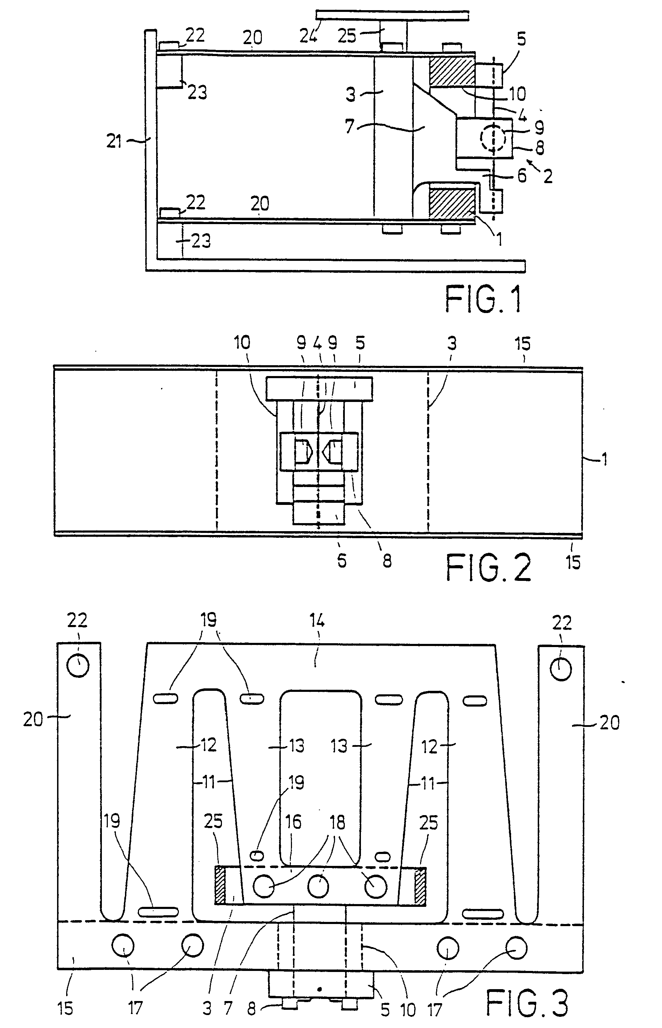

Figur 1 eine Ansicht der Waage, teilweise im Schnitt,

Figur 2 eine zweite Ansicht, von rechts in Figur 1, ohne Waagengestell und Lastschale, und

Figur 3 den Grundriss des in Figur 2 dargestellten Waagenteils.

Die dargestellte Waage ist als Saitenwaage konzipiert. Sie enthält eine Konsole 1 und einen beweglichen, das Messsystem 2 der Waage beeinflussenden Lastträger 3, der in unmittelbarer Nähe der Konsole 1 angeordnet ist. Das Messsystem 2 weist eine Saite 4 auf, die einerseits in einem Sockel 5 an der Aussenseite der Konsole 1 und andererseits am freien Ende eines vom Lastträger 3 ausgehenden, kurzen Armes 6 eingespannt ist. Seitlich an einem Ansatz 7 des Lastträgers 3 ist ein U-förmiger Tragbügel 8 angebracht, der zwei Permanentmagnete 9 trägt, mit denen die Saite 4 in Schwingungen versetzt wird. Der Ansatz 7 mit dem Arm 6 ragt durch eine rechteckförmige Ausnehmung 10 in der Konsole 1.

Die Parallelführung des Lastträgers 3 bezüglich der Konsole 1 wird gebildet aus in zwei Ebenen übereinander angeordneten Lenkern 11 in Form von Blattfedern, wobei in jeder Ebene zwei Lenker 11 vorgesehen sind. Jeder Lenker 11 besteht aus zwei Armen 12 und 13, die sich je von der Konsole 1 und dem Lastträger 3 aus in gleicher Richtung über den Lastträger 3 hinaus zu einer gemeinsamen, freischwebenden Verbindungsstelle erstrecken, welche hier durch einen für beide Lenker eine Ebene gemeinsamen Verbindungssteg 14 gebildet wird. An den Ansatzstellen sind die beiden Arme 12 und die beiden Arme 13 je unter sich durch einen Verbindungssteg 15 bzw. 16 miteinander verbunden. Der Verbindungssteg 15 ist an der Konsole 1 und der Verbindungssteg 16 am Lastträger 3 zum Beispiel mit Schrauben 17 bzw. 18 befestigt. Die Lenkerarme 12, 13 besitzen örtlich konzentrierte Biegestellen in Form von durch Ausnehmungen 19 erzeugte Schwachstellen.

Die Lenker 11 beider Ebenen sind je zusammen mit ihren Verbindungsstegen 15 und 16 aus einem Stück hergestellt, vorzugsweise aus Blech gestanzt. Im vorliegenden Beispiel sind am gleichen Stanzstück auch noch zwei als mechanische Tiefpassfilter wirkende Blattfedern 20 ausgebildet, über welche die Konsole 1 mit dem Waagengestell 21 verbunden ist, wobei die freien Enden dieser Blattfedern 20 zum Beispiel mit Schrauben 22 an Stützen 23 des Waagengestells 21 befestigt sind.

Die Lastschale 24 ist über seitlich am Lastträger 3 angebrachte Stützen 25 mit diesem verbunden.

Grundsätzlich wäre es auch möglich, Konsole und Lastträger derart ineinander anzuordnen, dass die Ansatzstellen der Lenkerarme 12 und 13 in einer Flucht liegen. Dadurch könnte unter Umständen nicht bloss der als Uebertragungsorgan dienende Arm 6 weiter verkürzt werden oder sogar wegfallen ; vielmehr könnte in diesem Fall eine zweite Parallelführung des Lastträgers auf der anderen Seite der Konsole vorgesehen werden. Es sind sogar auch Lösungen mit drei oder mehr konzentrisch angeordneten Parallelführungen möglich. Dem Gewinn in bezug auf das Führungsverhalten der Lastträgerbewegung bei symmetrischer Anordnung der Parallelführungen steht allerdings grösserer Aufwand und Raumbedarf gegenüber.

Zum genauen Parallelstellen der Lenker können verschiedene Massnahmen getroffen werden. Bevorzugt wird eine Lösung, bei der je zwei übereinander angeordnete Lenker 11 an den freischwebenden Verbindungsstegen 14 durch ein in seiner Länge veränderliches Einstellorgan miteinander verbunden sind. Dies ist im einfachsten Fall ein gekröpfter Draht, der durch zusätzliche Verformung der Kröpfstelle nachträglich verlängert oder verkürzt werden kann.

Die erfindungsgemässe Anordnung bildet einen Koppelschwinger (Konsole 1, Lastträger 3). Dies wirkt sich in einer geringeren Abhängigkeit der Eigenresonanzen des mechanischen Systems von der Wägelast aus und damit in einer Konzentration der Eigenresonanzen auf einen niedrigeren Bereich, verglichen mit einem einfachen Schwinger (zum Beispiel ca. 9 ... 11 Hz statt ca. 10 ... 30 Hz).

## Patentansprüche

1. Waage mit einem Waagengestell (21), einem Messsystem (2) und einem beweglichen, das Messsystem (21) beeinflussenden Lastträger (3), der mittels in zwei Ebenen übereinander angeordneten, durch Biegefedern gebildeten Lenkern (11) am Waagengestell (21) parallel geführt ist, wobei der Lastträger (3) benachbart zum Messsystem (2) angeordnet ist, sowie eine mit dem Messsystem (2) verbundene Konsole (1) vorgesehen ist, dadurch gekennzeichnet, dass die Konsole beweglich ist und einerseits über mechanische Tiefpassfilter (20) mit dem Waagengestell (21), andererseits über Lenker (11) mit dem Lastträger (3) verbunden ist, wobei sich die die Konsole (1) und den Lastträger (3) verbindenden Lenker (11) in gleicher Richtung zum Waagengestell (21) hin und zu je einem gemeinsamen oberen bzw. unteren freischwebenden Verbindungsstück (14) erstrecken.

2. Waage nach Anspruch 1, dadurch gekennzeichnet, dass jeder Lenker (11) mehrere Arme (12, 13) umfasst und diese mit dem Verbindungsstück (14) einstückig ausgebildet sind.

3. Waage nach Anspruch 1, dadurch gekennzeichnet, dass jeder Lenkerarm (12, 13) der Lenker (11) örtlich konzentrierte Biegesgtellen (19) aufweist.

4. Waage nach Anspruch 1, dadurch gekennzeichnet, dass je zwei der übereinander angeordneten Lenker (11) an den freischwebenden Verbindungsstücken (14) ihrer Arme (12, 13) durch ein in seiner Länge veränderliches Einstellorgan zum Parallelstellen der Lenker miteinander verbunden sind.

5. Waage nach Anspruch 1, dadurch gekennzeichnet, dass die mechanischen Tiefpassfilter (20) als elastische Blattfeder-Lenker ausgebildet sind.

6. Waage nach Anspruch 5, dadurch gekennzeichnet, dass die Tiefpassfilter bildenden Lenker (20) mit den Lenkern (11) jeder Ebene einstückig ausgebildet sind.

7. Waage nach Anspruch 1, dadurch gekennzeichnet, dass das Messsystem (2) wenigstens eine schwingende Saite (4) umfasst.

## Claims

1. Balance, comprising a balance support (21), a measuring system (2), and a movable load carrier (3) acting on the measuring system (2), the load carrier (3) being guided parallel to the balance support (21) by means of links (11) formed of bending springs and arranged in two planes, one above the other, the load carrier (3) being arranged adjacent the measuring system (2), a carrier (1) being provided that is connected to the measuring system (2), characterized in that the carrier (1) is movable and is connected on the one hand to the balance support (21) by means of mechanical low-pass filters (20), on the other hand to the load carrier (3) by means of links (11), the links (11) connecting the carrier (1) and the load carrier (3) extending in the same direction towards the balance support (21) and to a common upper and lower, respectively, freely floating connecting element (14).

2. Balance as in claim 1, characterized in that each link (11) comprises several arms (12, 13), the latter being formed as one piece together with the connecting element (14).

3. Balance as in claim 1, characterized in that each arm (12, 13) of the links (11) has locally concentrated flexure areas (19).

4. Balance as in claim 1, characterized in that each pair of links (11), arranged one above the other, is connected at the freely floating connecting elements (14) of their arms (12, 13) by an adjusting element that is variable in its length for adjusting the parallelity of the links.

5. Balance as in claim 1, characterized in that the mechanical low-pass filters (20) are elastic leaf-spring links.

6. Balance as in claim 5, characterized in that the links (20) forming the low-pass filters are one piece together with the links (11) of the respective plane.

7. Balance as in claim 1, characterized in that the measuring system (2) comprises at least one vibrating string (4).

**Revendications**

1. Balance comportant un bâti de balance (21), un système de mesure (2) et, agissant sur le système de mesure (2), un porte-charge mobile (3), qui est guidé parallèlement au bâti de balance (21) au moyen de guides (11) formés par des ressorts à flexion, placés l'un au-dessus de l'autre dans deux plans, cependant que le porte-charge (3) est voisin du système de mesure (2), tandis qu'il est prévu une console (1) reliée au système de mesure (2), caractérisée par le fait que la console est mobile et est reliée d'une part au bâti de balance (21) au moyen d'un filtre passe-bas (20), d'autre part au porte-charge (3) au moyen de guides (11), tandis que les guides (11) reliant la console (1) et le porte-charge (3) s'étendent dans une même direction par rapport au bâti de balance (21) et à chacune de pièces communes de raccordement (14) respectivement supérieure et inférieure en suspension libre.

2. Balance selon la revendication 1, caractérisée par le fait que chaque guide (11) comporte plusieurs bras (12, 13) et que ceux-ci sont formés d'une seule pièce avec la pièce de raccordement (14).

3. Balance selon la revendication 1, caractérisée par le fait que chaque bras (12, 13) des guides (11) présente des points de pliage localement concentrés (19).

4. Balance selon la revendication 1, caractérisée par le fait que les deux guides (11) respectivement placés l'un au-dessus de l'autre sont reliés ensemble à des pièces de raccordement (14) de leurs bras (12, 13) en suspension libre par un organe de réglage de longueur variable pour un positionnement parallèle des guides.

5. Balance selon la revendication 1, caractérisée par le fait que les filtres passe-bas (20) mécaniques sont réalisés sous la forme de guides-ressorts à lames flexibles.

6. Balance selon la revendication 5, caractérisée par le fait que les guides (20) constituant les filtres passe-bas sont formés avec des guides (11) d'une seule pièce dans chaque plan.

7. Balance selon la revendication 1, caractérisée par le fait que le système de mesure (2) comporte au minimum une corde (4) oscillante.

0 082 250

FIG.1

FIG.2

FIG.3